# EUROPEAN PATENT APPLICATION

(11) **EP 1 734 005 A1**
(43) Date of publication of application: **20.12.2006**
(21) Application number: 05720635.1
(22) Date of filing: 11.03.2005
(51) Int. Cl.: C01G 35/00, C01G 33/00

(54) **TANTALUM OXIDE AND/OR NIOBIUM OXIDE AND METHOD FOR PREPARATION THEREOF**

(30) Priority: 11.03.2004 JP 2004068312
(71) Applicant: Stella Chemifa Corporation, Osaka-shi, Osaka 541-0047 (JP)
(72) Inventor: KIKUYAMA, Hirohisa, STELLA CHEMIFA CORPORATION, Izumiootsu-shi, Osaka 5950075 (JP); WAKI, Masahide, STELLA CHEMIFA CORPORATION, Izumiootsu-shi, Osaka 5950075 (JP); HASHIGUCHI, Shinji, STELLA CHEMIFA CORPORATION, Izumiootsu-shi, Osaka 5950075 (JP); AOKI, Kenji, STELLA CHEMIFA CORPORATION, Izumiootsu-shi, Osaka 5950075 (JP)
(74) Representative: Dr. Weitzel & Partner
(86) International application number: PCT/JP2005/004364
(87) International publication number: WO 2005/087667

(57) **Abstract**

The object of the invention is to provide a method for preparing tantalum oxide and/or niobium oxide capable of providing tantalum oxide and/or niobium oxide in the form of a needle-like or columnar crystal, instead of a spherical crystal, or conglomerated cluster. The method comprises adding a basic aqueous solution to an aqueous solution of fluorotantalate and/or fluoroniobate to produce tantalum hydroxide and/or niobium hydroxide, and firing said tantalum hydroxide and/or niobium hydroxide.

## Description

### TECHNICAL FIELD

The present invention relates to powdery tantalum oxide and/or powdery niobium oxide, and a method for preparing them, for example, to powdery tantalum oxide and/or powdery niobium oxide comprising fine particles having a high purity and high specific surface area which will be used as a suitable material in the fabrication of piezoelectric elements, semiconductors, sensors, optoelectronic devices, dielectric elements, and superconductive elements, and to a method for preparing such powdery tantalum oxide and/or powdery niobium oxide.

### BACKGROUND ART

Patent Document 1: Japanese Unexamined Patent Application Publication No. 3-153527
Patent Document 2: Japanese Unexamined Patent Application Publication No. 6-321543
Patent Document 3: Japanese Unexamined Patent Application Publication No. 11-255518

Recently, there has been an increased demand for tantalum oxide and/or niobium oxide in the fabrication of electronics parts and devices. Particularly, a strong demand is manifest for powdery tantalum oxide and/or powdery niobium oxide whose particle has a small diameter and a high specific surface area, which will serve as a suitable material in the fabrication of optoelectronics devices and catalysts. However, preparation of powdery tantalum oxide and/or powdery niobium oxide conventionally occurs by taking tantalum hydroxide and/or niobium hydroxide as starting materials, and firing and pulverizing them. Thus, the resulting powder comprises particles which are not uniform in size and whose size is comparatively large. Under this current situation, there is an intensified demand for powdery tantalum oxide and/or powdery niobium oxide whose particle has a small diameter and a high specific surface area as described above.

To meet such a demand increasingly manifest currently, recently techniques have been developed for providing various elements comprised of fine particles in the form of sol. However, these techniques are limited only to the production of such a sol, and do not concern in any way with the subsequent processes, such as drying and firing which are accompanied by the fusion/conglomeration of particles. As the particles of a powdery element become finer, the readier the particles will fuse or conglomerate together when dried or fired. Consequently, the element, after having undergone drying/firing, will consist of particles having a large size, instead of a desired small size.

For the preparation of a niobium material, Patent Document 1(Japanese Unexamined Patent Application Publication No. 3-153527) discloses a technique for developing peroxy niobic acid sol. According to the report of this patent document, it is possible to obtain a niobium containing derivative of ceramics by mixing the peroxy niobic acid sol with a ceramics material, and sintering the mixture. Indeed, this technique is improved somewhat over the method comprising mixing a slurry of uneven niobium oxide or niobium hydroxide particles. However, even according to the method in question, it is still difficult to obtain a powdery ceramics material whose particle is fine and uniform in size, because when peroxy niobic acid sol is sintered together with other constitutive elements, the particles will vigorously aggregate together. Moreover, since peroxy niobic acid (H⁺[NbO₂(O)₂]⁻) sol is obtained by treating a material such as niobium hydroxide with a strong acid and aqueous solution of hydrogenperoxide to produce an aqueous solution of peroxy niobic acid, and keeping that solution at 5 to 50°C to turn it into a sol, the sol always carries peroxide therein which may restrict the use of the sol, depending on other coexistent constituents. For example, such peroxides are so reactive with other constitutive materials that they will pose a problem when used as a material in the fabrication of catalysts or optoelectronic devices, which is so serious that their use in the fabrication of those devices is denied.

Patent Document 2(Japanese Unexamined Patent Application Publication No. 6-321543) discloses a modified version of the above method based on niobium oxide sol which involves the addition of oxalic acid. Indeed, this method is effective in reducing the size of particles suspended in sol. However, this patent document also does not give any mention about how to cope with the fusion/conglomeration of particles which may occur as a result of subsequent drying and sintering.

Patent Document 3(Japanese Unexamined Patent Application Publication No. 11-255518) discloses a method for producing highly pure tantalum hydroxide and tantalum oxide. According to this patent document, tantalum oxide is actually dried and fired to produce powdery tantalum oxide, and the diameter of the powder particles is actually given. According to the description of this patent document, tantalum oxide subsequent to drying in fact comprises primary particles whose average diameter is 5.0 to 15.0 µm and the same tantalum oxide comprises primary particles with their average diameter being 1.0 to 10.0 µm after it has been fired and pulverized.

However, powdery tantalum oxide and/or niobium oxide recently used in combination with ceramics materials or as a material of electronics parts are required to comprise primary particles which have a very small average diameter and high specific surface area. Specifically, primary particles of powdery tantalum oxide and/or powdery niobium oxide are required to have an average diameter equal to or less than 1 µm and specific surface area equal to or more than 10 m²/g.

### DISCLOSURE OF THE INVENTION

### PROBLEM TO BE SOLVED BY THE INVENTION

The object of the invention is to provide tantalum oxide and/or niobium oxide which can be used as it is, not being restricted in their use, in the form of a powder comprising primary particles which have a very small average diameter and high specific surface area.

### MEANS FOR SOLVING PROBLEM

To achieve the above object, the present inventors studied hard and found that it is possible to obtain powdery tantalum oxide and/or niobium oxide comprising primary particles which have a very small average diameter and high specific surface area, by optimizing the condition of neutralization process which is undertaken during the production of tantalum hydroxide and/or niobium hydroxide. They reached the present invention based on this finding.

The present invention relates to a method for preparing tantalum oxide and/or niobium oxide, the method comprising adding a basic aqueous solution to an aqueous solution of fluorotantalate and/or fluoroniobate to produce tantalum hydroxide and/or niobium hydroxide, and firing the tantalum hydroxide and/or niobium hydroxide to produce tantalum oxide and/or niobium oxide in the form of needle-like or columnar crystals.

### EFFECT OF THE INVENTION

It is possible to obtain powdery tantalum oxide and/or niobium oxide comprising primary particles which have an average diameter equal to or less than 1 µm and specific surface area equal to or more than 10 cm²/g, by drying tantalum hydroxide and/or niobium hydroxide obtained as above, and firing them at a specified temperature. In addition, tantalum oxide and/or niobium oxide obtained by this method characteristically take needle-like or columnar crystal form, instead of spherical or conglomerate form usually encountered with crystals. It may be expected that tantalum oxide and/or niobium oxide in needle-like or columnar crystals, when used as a material in the fabrication of piezoelectric elements, semiconductors, sensors, optoelectronic devices, dielectric elements, or superconductive elements, would confer a novel functionality to those products.

### BRIEF DESCRIPTION OF THE DRAWINGS

Fig. 1 shows an SEM photograph of tantalum oxide and/or niobium oxide produced by an exemplary method.
Fig. 2 shows an SEM photograph of tantalum oxide and/or niobium oxide produced by an exemplary method.
Fig. 3 shows an SEM photograph of tantalum oxide and/or niobium oxide produced by an exemplary method.
Fig. 4 shows an SEM photograph of tantalum oxide and/or niobium oxide produced by an exemplary method.
Fig. 5 shows an SEM photograph of tantalum oxide and/or niobium oxide produced by an exemplary method.
Fig. 6 shows an SEM photograph of tantalum oxide and/or niobium oxide produced by an exemplary method.

### BEST MODE FOR CARRYING OUT THE INVENTION

The method of the present invention will be described below sequentially according to the constitutive steps.
Suitable starting materials to be used in the inventive method may include ores such as tantalite and/or columbite, or niokalite, alloys containing tantalum and/or niobium, capacitors made of tantalum and/or niobium, the remains of materials or vapor deposition films containing tantalum and/or niobium, and dusts and scraps left after processing with ultra-hard machining tools. A material composed mainly of tantalum and/or niobium is preferred, but suitable materials for the inventive method are not limited to above.

A starting material may be obtained by melting again a highly pure tantalum oxide and/or niobium oxide material. Alternatively, a starting material may be obtained by subjecting a start solution to extraction and ion exchange, and neutralizing a solution of tantalum oxide and/or niobium oxide in hydrofluoric acid with ammonia, aqueous ammonia, aqueous solution of ammonium carbonate, aqueous solution of ammonium hydrogencarbonate, hydrazine, or aqueous solution of hydrazine, to allow tantalum hydroxide and/or niobium hydroxide to precipitate.

A tantalum oxide and/or niobium oxide compound suitably used as a material in the production of ceramics compounds or electronics devices must generally have a purity of 99.8% or higher, preferably 99.9% or higher. Therefore, if a given tantalum and/or niobium material has a purity lower than the above desired level, the material should be purified to raise the level of purity.

If it is required to isolate tantalum and/or niobium from a compound whose content of tantalum and/or niobium is rather low, or to remove impurities from a coarsely purified tantalum and/or niobium compound, generally following methods may be employed.

(1) Solvent extraction using methylisobutyl ketone, tributyl phosphate, trioctylphosphine oxide, etc., or solvent that allows selective extraction;
(2) Differential crystallization enabling the selective crystallization of a target compound utilizing the difference of solubility to solvent among involved metal compounds;
(3) Ion exchange-based separation utilizing the selective adsorption of a target compound to the ion exchange resin; and
(4) Crystallization from a solution of a tantalum and/or niobium compound.

A solution of a tantalum and/or niobium compound purified by any one of the methods as described above, or a solution of fluorotantalate and/or fluoroniobate obtained by dissolving again highly purified tantalum oxide and/or niobium oxide in hydrofluoric acid may be subjected to following processes.

The above solution may contain, in addition to hydrofluoric acid, acid such as nitric acid, sulfuric acid or hydrochloric acid, or water or organic solvent.

To the above material solution is added a potassium-based electrolyte, sodium-based electrolyte ammonium-based electrolyte, lithium-based electrolyte, calcium-based electrolyte, or magnesium-based electrolyte, and then fluorotantalate salt and/or fluoroniobate salt is allowed to crystallize. Suitable electrolyte cation (M) to be used in this reaction may include K (potassium), Na (sodium), NH₄ (ammonium), Li (lithium), Ca (calcium), and Mg (magnesium), and any electrolytic compound may be used as long as it can release one of the above-described electrolytes.

However, in the reaction solution, there are, in addition to tantalum hydroxide and/or niobium hydroxide precipitating, excess electrolytes and their inorganic salts. To remove tantalum hydroxide and/or niobium hydroxide at a highly pure state from the solution or suspension, it is important for electrolytes, or inorganic salts obtained from the electrolytes to be dissolved more strongly than the target tantalum and/or niobium compound. Namely, it is desirable for the electrolytes or their inorganic salts to be more strongly soluble to the solvent. From this viewpoint, cations such as K (potassium), Na (sodium), and NH₄ (ammonium) are particularly preferred.

Suitable electrolytic compounds may include any salts of cation (M) such as chlorides (MₙCl), carbonates (MₙCO₃), hydrogencarbonates (MₙHCO₃), hydroxides (MₙOH), fluorides (MₙF), nitrides (MₙNO₃), sulfates (MₙSO₄), and their combinations. Among them, preferred salts may include chlorides (MₙCl), fluorides (MₙF), carbonates (MₙCO₃), hydrogencarbonates (MₙHCO₃), and hydroxides (MₙOH), because they are easy to handle and inexpensive.

To elicit the reaction, the electrolytic compound may be added as a solid or a solution. The electrolytic compound is preferably added as a solid because then the volume of the system or liquid waste discharged from the system can be minimized. The addition amount of the electrolytic compound is preferably adjusted to be 1.0 to 2.0 times as much as the amount required from a stoichiometrical viewpoint in terms of the amount of cation. For example, the addition amount in question is adjusted to be 1.5 time over the required amount. If the addition amount in question were below the above range, it would be undesirable because then the fraction of compounds undergoing crystallization would be reduced. On the contrary, if the addition amount in question were over the above range, it would be disadvantageous in terms of cost because then excess electrolytes not involved in the formation of crystals would be present.

Preferably, the material solution is kept at 30 to 70°C before it receives the addition of an electrolytic compound, and the resulting solution is kept below 30°C before it allows the crystallization of fluorotantalate salt and/or fluoroniobate salt. By so doing, it will be possible to increase the amount of target compound crystallized. If the target compound has such a high solubility that its crystallization is difficult, it will be possible to allow the target compound to slowly crystallize by removing solvent by heating. If sufficient crystallization can not be achieved by the aforementioned method, another method comprising drying the system to give a solid residue may be employed.

The thus-obtained solution containing crystals is filtrated to isolate crystals of fluorotantalate salt and/or fluoroniobate salt. Furthermore, the obtained crystals may be dried.

The solution to which crystals of fluorotantalate salt and/or fluoroniobate salt are dissolved is neutralized by a basic aqueous solution, so that tantalum hydroxide and/or niobium hydroxide is obtained.

The aqueous solution contains tantalum and/or niobium at 1 to 150 g/L in terms of the weight of tantalum and/or niobium. This is because, by adjusting the concentration of tantalum and/or niobium in the solution to such a low level, it becomes possible to lower the speed of neutralization, and thus to inhibit the rapid growth of crystals. Specifically, it will be easier to obtain needle-like or columnar crystals of a tantalum and/or niobium compound by adjusting the concentration of the tantalum and/or niobium compound to a level equal to or less than 150 g/L than would be otherwise possible. For example, if the concentration in question were below 1 g/L, the yield of crystals would be seriously reduced. Accordingly, the concentration of a tantalum and/or niobium compound is preferably 1 to 150 g/L, more preferably 5 to 50 g/L. During neutralization operation, the aqueous solution of a tantalum and/or niobium compound is preferably kept at 10 to 90°C, particularly 50 to 90°C.

Suitable basic aqueous solutions used for neutralization may include an aqueous solution of hydrazine, ammonia, ammonium carbonate, or ammonium hydrogencarbonate.

The concentration of the basic aqueous solution should be restricted to a level as low as possible so that coarse expansion of particles represented by the growth of hydroxide particles can be minimized. Thus, the concentration in question is preferably kept at 1 to 50 wt%, particularly at 1 to 30 wt%. The temperature of the basic aqueous solution is preferably kept at a temperature as high as possible, because then it is possible to inhibit the coarse expansion of particles occurring in association with their growth. The temperature in question is preferably kept at 10 to 90°C, particularly at 50 to 90°C.

Neutralization operation may be achieved either by a method whereby a basic aqueous solution is added with stirring to an aqueous solution of a tantalum and/or niobium compound, or by a method whereby an aqueous solution of a tantalum and/or niobium compound is added with stirring to a basic aqueous solution. Neutralization of an aqueous solution of tantalum and/or niobium compound is preferably achieved by adding a basic solution until the pH of the resulting neutralized solution is pH9. The addition of a basic aqueous solution preferably occurs at a rate as low as possible, preferably at 0.5 to 5.0 reaction equivalents/hour.

Isolation of tantalum hydroxide and/or niobium hydroxide may be achieved by solid-liquid separation. Solid-liquid separation for separating solid tantalum hydroxide and/or niobium hydroxide from other solutes dissolved in the aqueous solution may be achieved by simple filtration, pressurized filtration, centrifugation/filtration, etc. Subsequent to filtration, tantalum hydroxide and/or niobium hydroxide is further purified by washing. The washing operation may be achieved either by allowing the solid tantalum and/or niobium hydroxide to disperse in a cleaning agent, or by contacting the solid tantalum and/or niobium hydroxide with a cleaning agent. For this operation, suitable cleaning agents may include water, preferably ion exchange water generally called purified water. Deliberate adjustment of the pH of the cleaning agent is not necessary. A publicly known method for reducing the amount of residual anions may be employed which consists of washing/treating the solid tantalum and/or niobium hydroxide with a mineral acid containing boron (boric acid) at 0.1 to 2 wt%.

Drying the tantalum hydroxide and/or niobium hydroxide thus obtained may be achieved by air blowing, warm heating, or vacuum drying. The temperature and duration of drying are not limited to any specific range. After drying, it is possible to obtain powdery tantalum hydroxide and/or niobium hydroxide comprising primary particles which have an average diameter of 0.001 to 1 µm and a specific surface area of 10 to 200 m²/g.

Then, tantalum hydroxide and/or niobium hydroxide thus dried is fired to produce tantalum oxide and/or niobium oxide. During this operation, the temperature for firing is preferably kept at 600 to 1100°C. This is because by so doing it is possible to remove a trace amount of residual fluorine element by evaporation.

The duration of firing is not limited to any specific range, as long as it is sufficiently long to allow tantalum hydroxide and/or niobium hydroxide to be oxidized satisfactorily. For example, firing is carried out for 3 to 24 hours. The atmosphere for firing is preferably pure oxygen because the object of firing is to oxidize tantalum hydroxide and/or niobium hydroxide. However, the air may be employed, as long as sufficient supply of oxygen is ensured. To remove a trace amount of residual fluorine element, a known method may be employed whereby firing is carried out under a flow of air containing water vapor.

The temperature rise during firing is preferably adjusted to occur at a rate as rapid as possible that can be reached without damaging the crucible. This is because by so doing it is possible to accelerate the growth of crystals and urge crystals to take needle-like and/or columnar shape. Thus, the temperature rise during firing preferably occurs at a rate of 3 to 100°C/min, particularly 20 to 75°C/min. Of course the sample may be put into the crucible which is heated in advance to a specified temperature. The temperature rise during firing at a rate greater than 100°C/min is undesirable, because then the crucible might be damaged.

The term "columnar shape" used herein refers to square (polygon) column, circular column, and rod-like column, and columnar crystals include slender crystals extending straight perpendicularly with respect to a reference surface, obliquely, or curvilinearly, columns with two or more bifurcated branches, or columns comprising two or more daughter columns fused together.

The tantalum oxide and/or niobium oxide obtained as above by firing tantalum hydroxide and/or niobium hydroxide contains Ta₂O₅ at 99.9 wt% or higher (in terms of the total weight minus the weight of Nb and transition metals), and/or Nb₂O₅ at 99.9 wt% or higher (in terms of the total weight minus the weight of Ta and transition metals), and will be used as a very suitable material in the fabrication of optical and electronic devices.

The powdery tantalum oxide and/or niobium oxide obtained subsequent to the firing step comprises primary particles which have an average diameter of 0.01 to 1.0 µm and specific surface area of 10.0 to 50.0 m²/g. Moreover, the powdery tantalum oxide and/or niobium oxide obtained as above consists of needle-like and/or columnar crystals, and thus, when added at a tiny amount to other materials, it can be readily mixed uniformly with those materials, and expected to confer a new functionality to the mixture. Accordingly, tantalum oxide and/or niobium oxide obtained according to the inventive method will serve as a suitable tantalum and/or niobium material in the fabrication of catalysts, optoelectronic devices, semiconductors and piezoelectric elements, and will further see wide applications.

### EXAMPLES

The present invention will be further illustrated with reference to representative examples. The below described examples are cited simply as an illustration of the present invention, and the invention is not limited in any way to those examples.

The product of each Example is evaluated based on following data (1) to (5).

(1) Analysis of crystal structure: evaluation was based on data from an X-ray diffraction device (XRD).
(2) Amounts of metal impurities: evaluation was based on data of induction-coupled plasma atomic emission spectroscopic analysis.
(3) Photograph representing surface condition: evaluation was based on SEM photography.
(4) Average diameter of primary particles: evaluation was based on data provided by a particle size distribution meter (laser diffraction/scattering method).
(5) Specific surface area: evaluation was based on fluidity BET single point method.

### EXAMPLE 1

To a clear, PFA-made vessel having 1 L volume and equipped with a stirrer, 98% pure tantalum oxide 150 g (other impurities consisting of: Nb-200 ppm, Fe-1000 ppm, Si-1000 ppm, Ti-1500 ppm, K-1000 ppm, Na-500 ppm, Ni-500 ppm, Al-500 ppm, and insoluble components-5000 ppm) and 50% HF 500 g were transferred, and the mixture was stirred at 60°C overnight. Small amounts of insoluble components were removed by filtration. To further remove the other impurities to thereby obtain highly pure tantalum oxide, sulfuric acid and tributyl phosphate (TBP) were added for extraction. The mixture was allowed to divide into a lower aqueous phase and an upper TBP phase. The upper TBP phase was removed, to which was added potassium chloride 120 g (1.2 time the weight of tantalum), and the mixture was stirred at 45°C, and then cooled to 10°C to crystallize potassium fluorotantalate which was collected by filtration.

The thus obtained crystal potassium fluorotantalate 271 g was dissolved in water 5 kg to give a solution (25 g/L in terms of the weight of tantalum). To the solution, an aqueous solution of hydrazine (7.7 wt% in terms of the weight of hydrazine against the weight of the solution) obtained by dissolving a 85% aqueous solution of hydrazine 600 g in water 6 kg was added dropwise at 60°C over 1 hour with stirring to precipitate tantalum hydroxide which was then separated by filtration. The tantalum hydroxide was allowed to disperse in water 2.5 kg, and subjected to repulp washing and filtration three times in succession.

Tantalum hydroxide thus washed was dried being kept at 120°C for 8 hours, and fired for 6 hours in the presence of air with an electric furnace: the temperature was allowed to rise at a rate of 50°C/min until 1000°C was reached, and then the temperature maintained there (Sample A).

In the same manner, tantalum hydroxide obtained by adding dropwise 70 wt% hydrazine solution to 1 g/L tantalum solution was fired in the presence of air with an electric furnace: the temperature was allowed to rise at a rate of 1°C/min until 1000°C was reached, and then the temperature maintained there for 6 hours (Sample B).

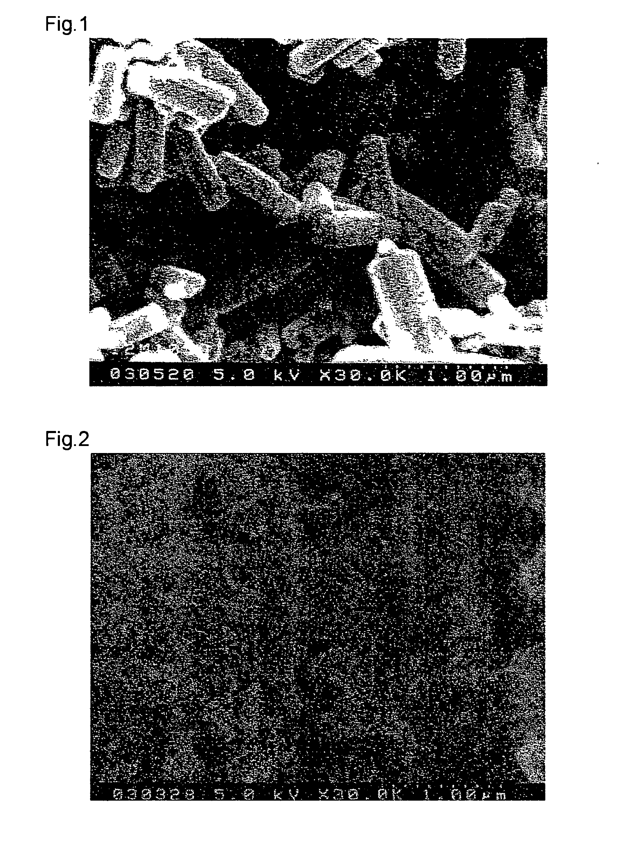

The fired products (Samples A and B) were inspected by XRD, and identified to be tantalum oxide (Ta₂O₅). The contents of metal impurities were: Nb (<10 ppm), K (<5 ppm), Na (<5 ppm), Ti (<1 ppm), Fe (<1 ppm), Fe (<1 ppm), Ni (<1 ppm), Al (<1 ppm), and Sb (<1 ppm). Photographs representing the surface condition of the samples are shown in Figs. 1 and 2. From the SEM image of Sample A shown in Fig. 1, it is recognized that the surface consists of uniform columnar crystals. It is further recognized that the crystals consist of very fine primary particles having a high specific surface area: the average diameter of primary particles is 0.75 µm, and their specific surface area is 13.7 g/m². Each particle has a columnar structure (average aspect ratio being 1.8). On the other hand, the SEM image of Sample B shown in Fig. 2 indicates that the surface consists not of crystal particles, but of densely packed conglomerations of crystals.

### EXAMPLE 2

To a clear, PFA-made vessel having 1 L volume and equipped with a stirrer, 99.9% pure tantalum oxide 150 g (other impurities consisting of: Nb-50 ppm, K-10 ppm, Na-10 ppm, Ti-10 ppm, Fe-10 ppm, Ni-10 ppm, Al-10 ppm, and Sb-ppm) and 50% HF 500 g were transferred, and the mixture was stirred at 60°C overnight. Small amounts of insoluble components were removed by filtration. Ammonium fluoride 72 g (1.4 time the weight of tantalum) was added and the mixture was stirred at 80°C and then cooled to 10°C to crytallize ammonium fluorotantalate, which was collected by filtration. The yield was dried being kept at 105°C for 6 hours.

The thus obtained crystal ammonium fluorotantalate 235 g was dissolved in water 5 kg to give a solution (25 g/L in terms of the weight of tantalum). To the solution, an aqueous solution of ammonia (6.0 wt% in terms of the weight of ammnonia against the weight of the solution) obtained by dissolving a 28% aqueous solution of ammonia 1500 g in water 5.5 kg was added dropwise at 90°C over 3 hours with stirring to precipitate tantalum hydroxide which was then separated by filtration. The tantalum hydroxide was allowed to disperse in water 3.5 kg, and subjected to repulp washing and filtration twice in succession (Sample 2-1).

Tantalum hydroxide was prepared in the same manner as above except that a solution obtained by adding an aqueous solution of ammonia to an aqueous solution of ammonium fluorotantalate was stirred at 0°C (Sample 2-2).

After washing the tantalum hydroxide samples (Samples 2-1 and 2-2) were dried being kept at 115°C for 8 hours, and fired in the presence of air with an electric furnace: the temperature was allowed to rise at a rate of 50°C/min until 1000°C was reached, and then the temperature maintained there for 6 hours.

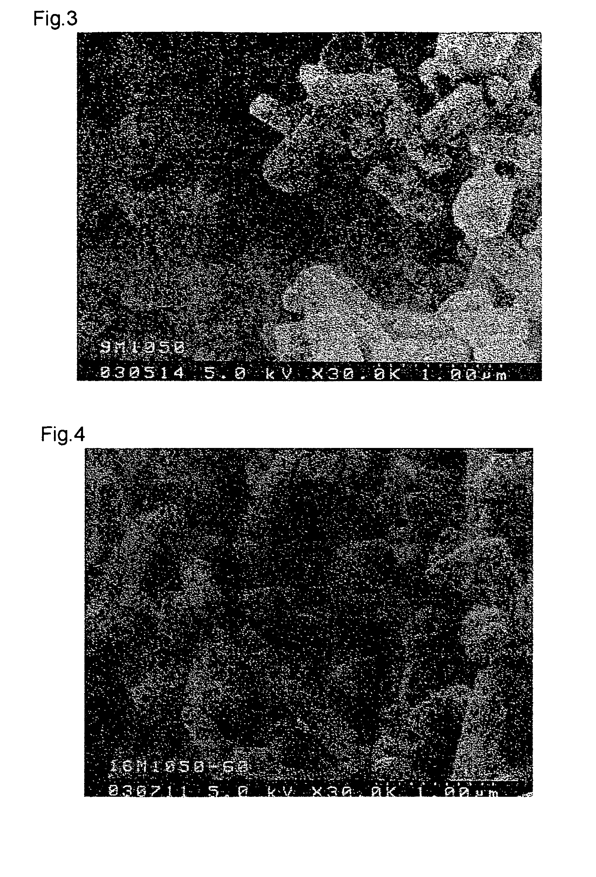

The fired products were inspected by XRD, and identified to be tantalum oxide (Ta₂O₅). The contents of metal impurities were: Nb (<10 ppm), K (<1 ppm), Na (<1 ppm), Ti (<1 ppm), Fe (<1 ppm), Ni (<1 ppm), Al (<1 ppm), and Sb (<1 ppm). Photographs representing the surface condition of the samples are shown in Figs. 3 and 4. From the SEM images, it is recognized that the surface consists of columnar crystals (average aspect ratio being 1.3). It is further recognized that the crystals consist of very fine primary particles having a high specific surface area: the average diameters of primary particles of the two samples are 0.6 and 0.7 µm and specific surface areas 15.3 and 13.1 g/m², respectively.

### EXAMPLE 3

To a clear, PFA-made vessel having 1 L volume and equipped with a stirrer, 99.9% pure niobium oxide 100 g (other impurities consisting of: Ta-30 ppm, K-10 ppm, Na-10 ppm, Ti-10 ppm, Fe-10 ppm, Ni-10 ppm, Al-10 ppm, and Sb-ppm) and 50% HF 300 g were transferred, and the mixture was stirred at 80°C for 6 hours. Small amounts of insoluble components were removed by filtration. Sodium fluoride 75 g (1.4 time the weight of niobium) was added and the mixture was stirred at 90°C and then cooled to 10°C to crytallize sodium fluoroniobate, which was collected by filtration.

The thus obtained crystal sodium fluoroniobate 220 g was dissolved in water 4 kg to give a solution (55 g/L in terms of the weight of niobium). To the solution, an aqueous solution of ammonium carbonate (14.5 wt% in terms of the weight of ammonium carbonate against the weight of the solution) obtained by dissolving ammonium carbonate 1100 g in water 6 kg was added dropwise at 90°C over 3 hours with stirring to precipitate niobium hydroxide which was then separated by filtration. The niobium hydroxide was allowed to disperse in water 4.5 kg, and subjected to repulp washing and filtration three times in succession.

After washing the niobium hydroxide sample was dried being kept at 115°C for 8 hours, and fired in the presence of air with an electric furnace: the temperature was allowed to rise at a rate of 10°C/min until 750°C was reached, and then the temperature maintained there for 8 hours.

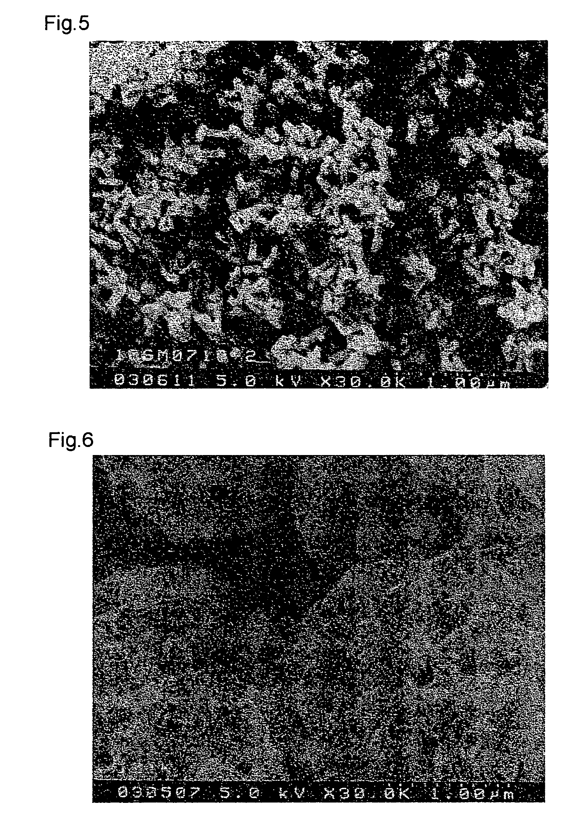

The fired product was inspected by XRD, and identified to be niobium oxide (Nb₂O₅). The contents of metal impurities were: Ta (<10 ppm), K (<5 ppm), Na (<5 ppm), Ti (<1 ppm), Fe (<1 ppm), Ni (<1 ppm), Al (<1 ppm), and Sb (<1 ppm). A photograph representing the surface condition of the sample is shown in Fig 5. From this SEM image, it is recognized that the surface consists of uniform needle-like crystals (average aspect ratio being 4.8). It is further recognized that the crystals consist of very fine primary particles having a high specific surface area: the average diameter of primary particles is 0.3 µm, and their specific surface area is 21.2 g/m².

### EXAMPLE 4

To a clear, PFA-made vessel having 1 L volume and equipped with a stirrer, 99.9% pure niobium oxide 100 g (other impurities consisting of: Ta-30 ppm, K-10 ppm, Na-10 ppm, Ti-10 ppm, Fe-10 ppm, Ni-10 ppm, Al-10 ppm, and Sb-ppm) and 50% HF 300 g were transferred, and the mixture was stirred at 80°C for 6 hours. Small amounts of insoluble components were removed by filtration (solution of 250 g/L in terms of the weight of niobium). To the solution, an aqueous solution of ammonia (6.0 wt% in terms of the weight of ammnonia against the weight of the solution) obtained by dissolving a 28% aqueous solution of ammonia 1500 g in water 5.5 kg was added dropwise at 90°C over 2 hour with stirring to precipitate niobium hydroxide which was then separated by filtration. The niobium hydroxide was allowed to disperse in water 3.5 kg, and subjected to repulp washing and filtration three times in succession.

After washing the niobium hydroxide sample was dried being kept at 115°C for 8 hours, and fired in the presence of air with an electric furnace: the temperature was allowed to rise at a rate of 50°C/min until 750°C was reached, and then the temperature maintained there for 8 hours.

The fired product was inspected by XRD, and identified to be niobium oxide (Nb₂O₅). The contents of metal impurities were: Ta (<10 ppm), K (<5 ppm), Na (<5 ppm), Ti (<1 ppm), Fe (<1 ppm), Ni (<1 ppm), Al (<1 ppm), and Sb (<1 ppm).

A photograph representing the surface condition of the sample is shown in Fig 6. From this SEM image, it is recognized that primary particles fuse together as a result of firing to form enlarged conglomerations. It is further recognized that the crystals consist of primary particles whose average diameter is 4.8 µm, and specific surface area 0.8 g/m², that is, having a dimension comparable with that of the same compound conventionally used in the fabrication of optical elements.

Thus, it is possible to obtain tantalum oxide and/or niobium oxide in the form of columnar and/or needle-like crystals comprising primary particles of which the average diameter is equal to or less than 1 µm, specific surface area is equal to or more than 10 m²/g, and aspect ratio is in the range of 1 to 5, by employing fluorotantalate and/or fluoroniobate in a neutralization step whereby tantalum hydroxide and/or niobium hydroxide can be obtained, in contrast with a neutralization step dispensing with the use of tantalum hydroxide and/or niobium hydroxide wherein primary particles have such a strong tendency to fuse together that they can hardly be controlled to take a form very fine and specifically designed.

### INDUSTRIAL APPLICABILITY

It is possible to obtain powdery tantalum oxide and/or niobium oxide comprising primary particles having an average diameter of 1 µm or less, and specific surface area of 10 m²/g or more, by drying tantalum hydroxide and/or niobium hydroxide, and firing it at a specified temperature. This method ensures another feature: it allows the crystal of tantalum oxide and/or niobium oxide to take a needle-like or columnar form, in contrast with the conventional crystal of tantalum oxide and/or niobium oxide which takes a spherical or conglomerated form. It may be expected that tantalum oxide and/or niobium oxide in needle-like or columnar crystals, when used as a material in the fabrication of piezoelectric elements, semiconductors, sensors, optoelectronic devices, dielectric elements, or superconductive elements, would confer a novel functionality to those products that has never been observed heretofore.

## Claims

1. A method for preparing tantalum oxide and/or niobium oxide, the method comprising adding a basic aqueous solution to an aqueous solution of fluorotantalate and/or fluoroniobate to produce tantalum hydroxide and/or niobium hydroxide, and firing the tantalum hydroxide and/or niobium hydroxide to produce tantalum oxide and/or niobium oxide in the form of a needle-like or columnar crystal.

2. The method according to Claim 1 wherein the fluorotantalate and/or fluoroniobate is a potassium salt, sodium salt, or ammonium salt.

3. The method according to Claim 1 or 2 wherein the concentration of tantalum and/or niobium in the aqueous solution is 1 to 150 g/L in terms of the weight of tantalum and/or niobium.

4. The method according to any one of Claims 1 to 3 wherein the basic aqueous solution is an aqueous solution of hydrazine, aqueous ammonia, aqueous solution of ammonium carbonate, or aqueous solution of ammonium hydrogencarbonate.

5. The method according to any one of Claims 1 to 4 wherein the concentration of the basic aqueous solution is 1 to 50 wt%.

6. The method according to any one of Claims 1 to 5 wherein the concentration of the basic aqueous solution is 1 to 30 wt%.

7. The method according to any one of Claims 1 to 6 wherein the temperature of the basic aqueous solution is 0 to 90°C.

8. The method according to any one of Claims 1 to 7 wherein the temperature of the basic aqueous solution is 50 to 90°C.

9. The method according to any one of Claims 1 to 8 wherein the rate of temperature rise during firing is 3 to 100°C/minute.

10. The method according to any one of Claims 1 to 9 wherein the rate of temperature rise during firing is 20 to 75°C/minute.

11. Tantalum oxide and/or niobium oxide in the form of a needle-like or columnar crystal produced by the method according to any one of Claims 1 to 10.

12. Tantalum oxide and/or niobium oxide according to Claim 11 in the form of a needle-like or columnar crystal whose aspect ratio (ratio of length/diameter) is 1.0 to 10.

13. Powdery tantalum oxide and/or powdery niobium oxide according to Claim 11 or 12 comprising particles whose diameter is 0.01 to 1.0 µm.

14. Powdery tantalum oxide and/or powdery niobium oxide according to Claim 12 or 13 comprising particles whose specific surface area is 10.0 to 50.0 m²/g when measured by a BET N₂ single point method.
